# EUROPÄISCHE PATENTSCHRIFT

(11) **EP 2 235 398 B1**
(45) Veröffentlichungstag und Bekanntmachung des Hinweises auf die Patenterteilung: **04.06.2014**
(21) Anmeldenummer: 08871804.4
(22) Anmeldetag: 10.12.2008
(51) Int. Cl.: F16H 55/14

(54) **SCHRAUBRAD MIT DÄMPFUNG**
SKEW GEAR WITH ATTENUATION
ROUE HÉLICOÏDALE À AMORTISSEMENT

(30) Priorität: 31.01.2008 DE 102008007105
(43) Veröffentlichungstag der Anmeldung: 06.10.2010
(73) Patentinhaber: ZF Friedrichshafen AG, 88038 Friedrichshafen (DE)
(72) Erfinder: BEUTLER, Olaf, 49356 Diepholz (DE); BLANKENSPECK, Remt, 49457 Drebber (DE); ROGOWSKI, Waldemar, 49504 Lotte (DE); LOHFINK, Günter, 38667 Bad Harzburg (DE)
(86) Internationale Anmeldenummer: PCT/DE2008/050040
(87) Internationale Veröffentlichungsnummer: WO 2009/094970

(56) Entgegenhaltungen:
- EP-A- 1 339 596
- DE-A1-102006 010 270
- US-A1- 2005 028 629

## Beschreibung

Die Erfindung betrifft ein Schraubrad nach dem Oberbegriff des Anspruchs 1. Sie bezieht sich insbesondere auf ein aus mehreren Komponenten bestehendes Schraubrad, welches für ein Lenkgetriebe vorgesehen ist. Demgemäß handelt es sich bei dem Schraubrad um ein so genanntes gebautes Schraubrad.

Bekannte Schraubräder dieser Art bestehen zum Beispiel aus einem Zahnkranz aus Kunststoff oder Metall und axial beidseitig des Zahnkranzes angeordneten Flanschen, mittels welcher der Zahnkranz stabilisiert wird und das Schraubrad drehfest auf einer Welle montiert werden kann. Der Zahnkranz und die Flansche werden dazu kraft- und/oder formschlüssig miteinander verbunden und so radial, axial und torsional zueinander fixiert.

Ein gattungsgemäßes Schraubrad wird beispielsweise durch die EP 1 339 596 B1 und durch die DE 10 2006 010 270 A1 offenbart. Die in den genannten Druckschriften beschriebenen Schraubräder weisen, zumindest gemäß vorgesehener vorteilhafter Ausbildungsformen, elastomere Dämpfungselemente auf, welche in Form von O-Ringen zwischen den Flanschen und dem Zahnkranz angeordnet sind. Durch diese werden axiale und radiale Schwingungen sowie torsionale Belastungen, welche auf mit den entsprechenden Schraubrädern ausgestattete Lenkgetriebe einwirken, unter Erhöhung des Komforts gedämpft. Wie aus den Figuren der genannten Druckschriften erkennbar, weisen entsprechende Schraubräder, einschließlich der vorzugsweise vorhandenen Dämpfungselemente, eine nicht geringe Anzahl zusammenzufügender Einzelkomponenten auf. Je größer jedoch die Anzahl der zu einem Schraubrad zusammenzufügenden Komponenten ist, desto aufwändiger ist die Herstellung eines solchen Schraubrads. Dieser fertigungstechnische Nachteil geht einher mit erhöhten Kosten für die Fertigung.

Die US 2005/0028629 A1 offenbart eine Antriebsanordnung für einen Elektromotor mit einer eine Schnecke umfassenden Welle, wobei ein mit der Schnecke kämmendes Abtriebsritzel mit einer Mehrzahl von Armen versehen ist, die sich vom Umfang des Abtriebsritzels aus radial zu dessen Zentrum hin erstrecken. Ferner ist ein Mitnehmer vorgesehen, der in der Nähe seines Umfangs eine Mehrzahl von Nocken aufweist, die in Zwischenräume zwischen den Armen eingreifen, sodass der Mitnehmer mit dem Abtriebsritzel in Drehmitnahmeverbindung steht. Die Zähne des Abtriebsritzels können dabei aus einem anderen Material als der Rest des Abtriebsritzels bestehen.

Aufgabe der Erfindung ist es, ein Schraubrad mit einer Dämpfung bereitzustellen, welches einen gegenüber dem Stand der Technik einfacheren Aufbau besitzt und somit einfacher und kostengünstiger zu fertigen ist. Dabei soll das entsprechende Schraubrad eine sowohl hinsichtlich axialer und radialer Schwingungen sowie torsionaler Belastungen wirkungsvolle Dämpfung aufweisen.

Die Aufgabe wird durch ein Schraubrad mit den Merkmalen des Hauptanspruchs gelöst. Vorteilhafte Aus- beziehungsweise Weiterbildungen der Erfindung sind durch die Unteransprüche gegeben.

Das zur Lösung der Aufgabe vorgeschlagene Schraubrad ist, wie bereits in der Einleitung ausgeführt, als ein gebautes Zahnrad ausgebildet. Es besteht aus einem ersten Flansch zur drehfesten Anordnung des Schraubrades auf einer Welle oder einem Ritzel, einem zweiten Flansch oder einer Scheibe und einem zwischen ihnen angeordneten sowie relativ zu ihnen verdrehbaren Zahnkranz. Die beiden Flansche beziehungsweise der erste Flansch und die Scheibe sind in einem Kraft- oder Formschluss miteinander verbunden, wobei ihre der Verbindung dienenden Elemente den Zahnkranz in der axialen Richtung durchragen. Das Schraubrad ist mit einer Dämpfung ausgestattet, durch welche der Zahnkranz gegenüber den beiden Flanschen beziehungsweise dem Flansch und der Scheibe im Hinblick auf die diesen gegenüber mögliche Relativbewegung gedämpft ist.

Erfindungsgemäß bilden dabei der Zahnkranz und die Dämpfung eine Einheit aus, indem zur Ausbildung der Dämpfung an eine innere Kontur des Zahnkranzes mindestens ein elastomeres Element angespritzt ist. Im Hinblick auf die Verdrehbarkeit des Zahnkranzes werden zumindest die dabei auftretenden torsionalen Kräfte durch das erfindungsgemäß angespritzte elastomere Element gedämpft. Jedoch treten beim Einsatz des Schraubrades, bei welchem dieses mit einer Schnecke kämmt, im Zusammenhang mit der Drehung des Zahnkranzes auch radiale und axiale Kräfte auf, durch deren Wirken der Zahnkranz gegen Teile beziehungsweise Flächenabschnitte der beiden Flansche beziehungsweise des ersten Flansches und der Scheibe gedrückt wird. Zur Erhöhung des Komforts sind daher vorzugsweise auch diese Kräfte zu dämpfen. Gemäß einer bevorzugten Ausgestaltung der Erfindung ist daher durch das oder die elastomeren Elemente eine sowohl torsional, als auch axial und radial wirkende Dämpfung ausgebildet.

Bei dem erfindungsgemäßen Schraubrad sind auf der radial inneren Seite des Zahnkranzes in einer ersten axialen Ebene und in einer zweiten axialen Ebene jeweils mehrere auf dem Umfang gleichmäßig verteilt angeordnete. nach radial innen aufragende Stege angeordnet. Die betreffenden Stege weisen dabei an ihren radial inneren Enden, bezogen auf die Umfangsrichtung, jeweils beidseitig eine als Widerhaken wirkende Kontur auf. Mit dieser widerhakenähnlichen Kontur steht das angespritzte Elastomer unter Ausbildung einer zumindest torsional wirkenden Dämpfung in Eingriff.

Die vorgenannte Ausbildungsform ist vorzugsweise so gestaltet, dass die in der ersten axialen Ebene angeordneten Stege gegenüber den in der zweiten axialen Ebene angeordneten Stegen bezüglich der Umfangsrichtung in einem Versatz angeordnet sind. In beiden axialen Ebenen sind dabei vorzugsweise jeweils mindestens zwei Stege angeordnet, wobei der Winkel, in welchem die Stege der ersten axialen Ebene gegen die Stege der zweiten axialen Ebene versetzt sind, gleich dem der Gesamtzahl der Stege beider axialer Ebenen entsprechenden Teil des Vollkreiswinkels von 360° ist. Hierdurch ist, wiederum bezogen auf die Umfangsrichtung, immer jeweils mittig zwischen den Stegen einer axialen Ebene ein Steg der jeweils anderen axialen Ebene angeordnet.

Bei dem erfindungsgemäßen Schraubrad wird die Dämpfung durch ein elastomeres Element ausgebildet, welches entsprechend die Außenkonturen der nach radial innen ragenden Stege des Zahnkranzes umgibt. Dabei ist zwischen den beiden Stegebenen des Zahnkranzes ein am Innenumfang des Zahnkranzes umlaufender Elastomerring ausgebildet, der bei der Fertigung durch das in eine entsprechend ausgebildete Form einfließende und um die mit den Widerhaken versehenen Stege herum fließende Elastomer ausgebildet wird. Die Dämpfung ist folglich in diesem Falle durch ein einzelnes beziehungsweise einstückiges Element ausgebildet.

Eine radial wirkende Dämpfung ist bei dem mit den von dem Elastomer umgebenen Stegen ausgebildeten Schraubrad dadurch realisiert, dass mittig des axialen, vom Elastomer bedeckten Endes der Stege, genauer gesagt auf den jeweiligen Stirnseiten der Stege, an das Elastomer eine Aufwölbung angeformt ist. Eine axiale Dämpfung wird dadurch erreicht, dass diese Aufwölbung die Stege in Richtung der axialen Mitte des Zahnkranzes überragt und zwar bis zur axialen Mitte des Zahnkranzes oder darüber hinaus.

Details der Erfindung sollen nachfolgend an einem Ausführungsbeispiel nochmals näher erläutert werden. In den zugehörigen Zeichnungen zeigen:
- Fig. 1:: eine mögliche Ausbildungsform des erfindungsgemäßen Schraubrades in einer räumlichen Darstellung,
- Fig. 2:: den Zahnkranz des Schraubrades gemäß Fig. 1 in einer räumlichen Darstellung,
- Fig. 3:: den Zahnkranz gemäß Fig. 2 in einer Draufsicht aus axialer Richtung,
- Fig. 4:: den Zahnkranz gemäß der Fig. 3, in radial geschnittener Darstellung.

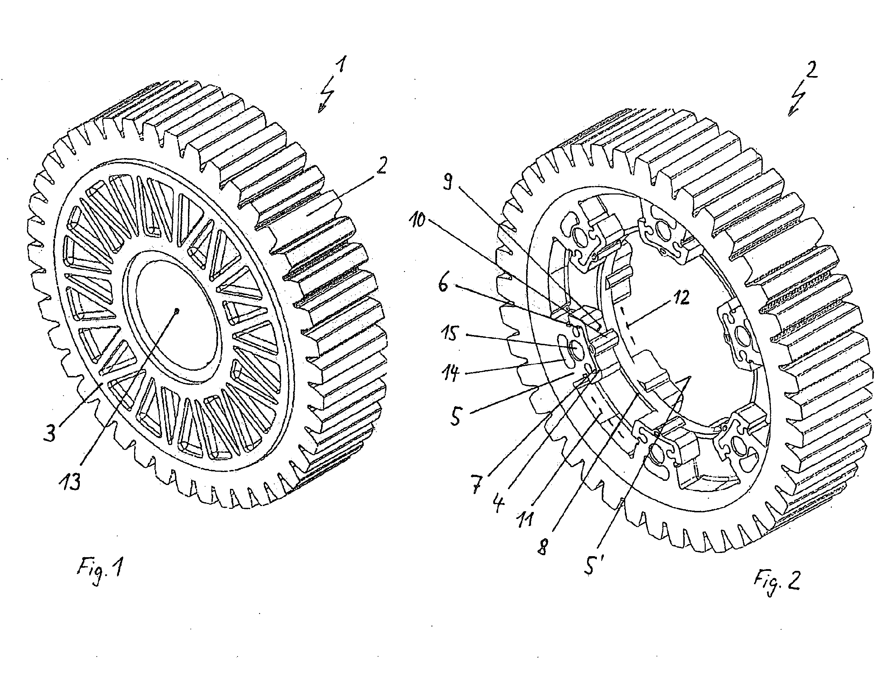

Die Fig. 1 zeigt ein mögliches Ausführungsbeispiel des erfindungsgemäßen Schraubrades 1. Die Figur zeigt das Schraubrad 1 in räumlicher Darstellung. Wie aus der Figur ersichtlich, handelt es sich vorliegend um ein gerade verzahntes Schraubrad 1, wobei an der Breite der Zähne des Zahnkranzes 2 zu erkennen ist, dass es sich um ein zum Kämmen mit einer Schnecke vorgesehenes Schraubrad 1 handelt.

Der Zahnkranz 2 ist auf der in der Abbildung zu sehenden axialen Seite durch eine durchbrochene Scheibe 3 verschlossen, welche kraft- oder formschlüssig mit einem auf der axial gegenüberliegenden Seite angeordneten (in der Figur nicht sichtbaren) Flansch verbunden ist. Mittels des nicht gezeigten Flansches ist das Schraubrad 1 drehfest auf einer Welle oder einem Ritzel montierbar. Hierbei wird der kreisrunde zentrische Durchbruch 13 von der Welle oder dem Ritzel durchragt. Der Zahnkranz 2 ist in der Umfangsrichtung relativ zu dem (nicht gezeigten) Flansch und der Scheibe 3 beweglich, also gegenüber ihnen verdrehbar.

Die Fig. 2 zeigt nochmals den Zahnkranz 2 des Schraubrades 1 gemäß Fig. 1 ohne die Scheibe 3 und den Flansch. In dieser Darstellung ist die Dämpfung zu erkennen, welche erfindungsgemäß durch ein an die Innenkontur des Zahnkranzes 2 angespritztes elastomeres Element 4 ausgebildet ist. Im Vordergrund zu erkennen sind mehrere, gleichmäßig auf dem Umfang verteilt, in einer axialen Ebene 11 angeordnete Stege 5, welche auf der Innenseite des Zahnkranzes 2 radial nach innen aufragen. Die Stege 5 weisen jeweils an ihrem radial inneren Ende, bezogen auf die Umfangsrichtung, beidseits eine als Widerhaken 6, 7 wirkende beziehungsweise widerhakenähnliche Kontur auf. Mit dieser Kontur ist das die Dämpfung ausbildende elastomere Element 4 in Eingriff gebracht, wobei es die radialen Enden der Stege 5 im Bereich der Widerhaken 6, 7 und an ihren Stirnseiten 9 bedeckt. Auf der den im Vordergrund sichtbaren Stegen 5 axial gegenüberliegenden Seite sind in einer zweiten axialen Ebene 12 ebenfalls nach radial innen aufragende Stege 5' gleicher Zahl angeordnet. Wie zu erkennen, sind die Stege 5' auf der axial abgewandten Seite gegenüber den Stegen 5 auf der axial im Vordergrund dargestellten Seite des Zahnkranzes 2 bezüglich der Umfangsrichtung in einem Winkel von 30° versetzt angeordnet. Zwischen den beiden Stegebenen 11, 12 ist ein am Innenumfang des Zahnkranzes 2 vollständig umlaufender Elastomerring 8 ausgebildet. Dieser entsteht bei der Fertigung durch das in die entsprechend gestaltete Form einfließende und um die radialen Enden Stege 5, 5' herum fließende Elastomer, welches insoweit bei dem dargestellten Ausführungsbeispiel eine einstückige Dämpfung ausbildet. Aus der Abbildung ist ferner ersichtlich, dass an das die Stege 5, 5' an ihren radialen Stirnseiten 9 bedeckende Elastomer jeweils mittig eine Aufwölbung 10 angeformt ist. Durch diese Aufwölbung 10 ist eine in radialer Richtung wirkende Dämpfung gegeben.

Bei den in der Figur in den Stegen 5 erkennbaren Ausnehmungen 14 handelt es sich um so genannte Entlastungskeme. Diese sind aus fertigungstechnischen Gründen vorgesehen und dienen des Reduzierung der Wandstärke, um bei der Herstellung des als Spritzteil ausgebildeten Zahnkranzes 2 die Zykluszeit in Spritzmaschine zu verkürzen. Ferner sind die Anspritzpunkte 15 zu erkennen, über welche das Material in die entsprechende Form eingespritzt wird.

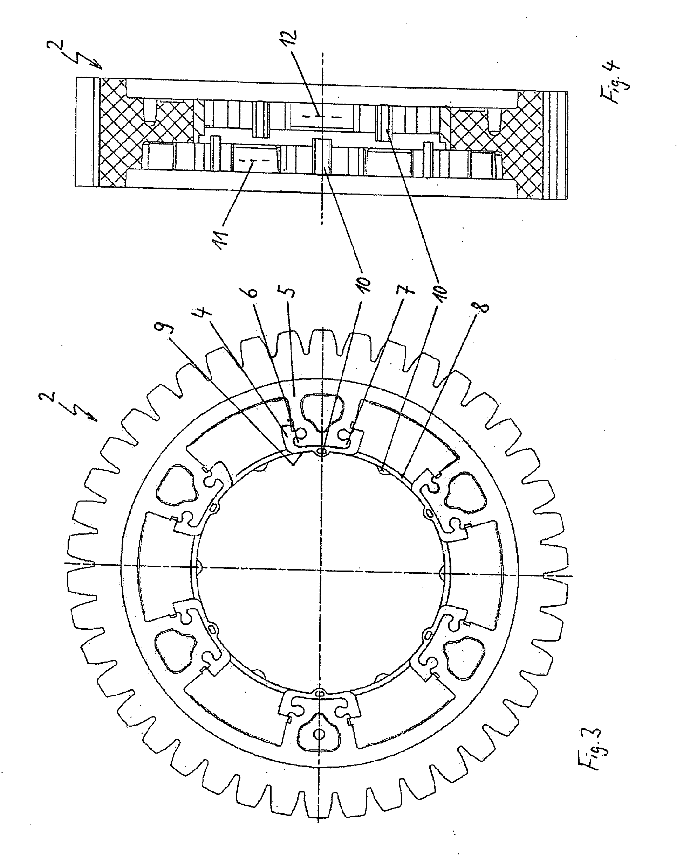

In der Fig. 4, welche den Zahnkranz 2 des erfindungsgemäßen Schraubrades 1 nochmals in einer radial geschnittenen Darstellung zeigt, ist erkennbar, dass die vorgenannte Aufwölbung 10 die Stege 5, 5' jeweils nach axial innen gerichtet, das heißt zur axialen Mitte des Zahnkranzes 2, überragt Durch diesen die Stege 5, 5' überragenden Bereich ist eine Dämpfungswirkung in axialer Richtung gegeben.

Der in der Fig. 4 in radial geschnittener Darstellung gezeigte Zahnkranz 2 ist in der Fig. 3 nochmals in einer Draufsicht aus axialer Richtung dargestellt. Dabei ist der Zahnkranz 2 in der Fig. 3 in einer Draufsicht aus Richtung der in der Fig. 2 der Betrachtungsebene abgewandten axialen Seite gezeigt. Hier sind insbesondere die torsional wirkenden Bereiche und die radial wirkenden Bereiche der Dämpfung zu erkennen, wobei die torsionale Dämpfung durch das die Stege 5, 5' im Bereich der an ihren Enden ausgebildeten Widerhaken 6, 7 bedeckende Elastomer gegeben ist.

### Bezugszeichenliste

- 1: Schraubrad
- 2: Zahnkranz
- 3: Scheibe
- 4: elastomeres Element
- 5, 5': Steg
- 6, 7: Widerhaken
- 8: Elastomerring
- 9: Stirnseite
- 10: Aufwölbung
- 11, 12: (axiale) Ebene
- 13: Durchbruch
- 14: Ausnehmung
- 15: Anspritzpunkt

## Patentansprüche

1. Schraubrad (1), ausgebildet als ein gebautes Zahnrad, mit einem ersten Flansch zur drehfesten Anordnung des Schraubrades auf einer Welle oder einem Ritzel, einem zweiten Flansch oder einer Scheibe (3), welcher beziehungsweise welche mit dem ersten Flansch in einem Kraft- oder Formschluss verbunden ist und einem zwischen ihnen angeordneten sowie relativ zu ihnen verdrehbaren Zahnkranz (2), wobei das Schräubrad (1) mit einer Dämpfung versehen ist, durch welche der Zahnkranz (2) gegenüber dem ersten Flansch und dem zweiten Flansch oder der Scheibe (3) mit ihren sie verbindenden, den Zahnkranz (2) in der axialen Richtung durchragenden Teilen gedämpft ist, und wobei auf der radial inneren Seite des Zahnkranzes (2) in einer ersten axialen Ebene (11) und in einer zweiten axialen Ebene (12) jeweils mehrere auf dem Umfang gleichmäßig verteilt angeordnete, nach radial innen aufragende Stege (5, 5') angeordnet sind, **dadurch gekennzeichnet, dass** die Stege (5, 5') an ihren radial inneren Enden, bezogen auf die Umfangsrichtung, jeweils beidseitig eine als Widerhaken (6, 7) wirkende Kontur aufweisen, mit welcher das angespritzte Elastomer unter Ausbildung einer zumindest torsional wirkenden Dämpfung in Eingriff steht, der Zahnkranz (2) und die Dämpfung eine Einheit ausbilden, indem zur Ausbildung der Dämpfung an eine innere Kontur des Zahnkranzes mindestens ein elastomeres Element (4) angespritzt ist, und die Dämpfung durch ein einstückiges elastomeres Element (4) ausgebildet ist, wobei zwischen den Ebenen (11, 12) mit den in radialer Richtung aufragenden Stegen (5, 5') ein am Innenumfang des Zahnkranzes (2) umlaufender Elastomerring (8) ausgebildet ist, welcher eine Einheit bildet mit dem die axial beidseits des Elastomerrings (8) angeordneten Stege (5, 5') auf ihrer radial inneren Stirnseite (9) und im Bereich der Widerhaken (6, 7) zur Ausbildung der Dämpfung bedeckenden Elastomer.

2. Schraubrad (1) nach Anspruch 1, **dadurch gekennzeichnet, dass** die in der ersten axialen Ebene (11) angeordneten Stege (5) gegenüber den in der zweiten axialen Ebene (12) angeordneten Stegen (5') bezüglich der Umfangsrichtung in einem Versatz angeordnet sind, wobei in beiden axialen Ebenen (11, 12) jeweils mindestens zwei Stege (5, 5') angeordnet sind und der Winkel, in welchem die Stege (5) der ersten axialen Ebene (11) gegen die Stege (5') der zweiten Ebene (12) versetzt sind, gleich dem der Gesamtzahl der Stege (5, 5') beider axialer Ebenen (11, 12) entsprechenden Teil des Vollkreiswinkels ist, so dass, bezogen auf die Umfangsrichtung, immer jeweils mittig zwischen den Stegen (5, 5') einer axialen Ebene (12, 12) ein Steg (5', 5) der jeweils anderen axialen Ebene (12, 11) angeordnet ist.

3. Schraubrad (1) nach Anspruch 1 oder 2, wobei die auf der Innenseite des Zahnkranzes (2) radial aufragenden Stege (5, 5') im Bereich der Widerhaken (6, 7) und auf ihrer radialen Stirnseite (9) mit dem die Dämpfung ausbildenden Elastomer bedeckt sind, **dadurch gekennzeichnet, dass** das die Stirnseiten (9) der Stege (5, 5') bedeckende Elastomer jeweils in einem mittleren Bereich der Stirnseite (9) eines betreffenden Stegs (5, 5') eine Aufwölbung (10) mit einer Dämpfungswirkung in radialer Richtung aufweist.

4. Schraubrad (1) nach Anspruch 3, wobei die Stege (5, 5') bezüglich der beiden Ebenen (11, 12) zueinander versetzt angeordnet sind, **dadurch gekennzeichnet, dass** die elastomeren Aufwölbungen (10) an den Stirnseiten (9) der Stege (5, 5') sich in der axialen Richtung über die Stege (5, 5') hinaus bis zur axialen Mitte des Zahnkranzes (2) oder darüber hinaus erstrecken, wodurch eine Dämpfungswirkung in axialer Richtung gegeben ist.

## Claims

1. Helical gear (1), designed as a built-up gearwheel, with a first flange for the rotationally fixed arrangement of the helical gear on a shaft or a pinion, with a second flange or a disc (3) which is connected non-positively or positively to the first flange and with a toothed ring (2) arranged between them and rotatable in relation to them, the helical gear (1) being provided with damping, by means of which the toothed ring (2) is damped with respect to the first flange and to the second flange or the disc (3), together with their parts connecting them and projecting through the toothed ring (2) in the axial direction, and there being arranged on the radially inner side of the toothed ring (2), in a first axial plane (11) and in a second axial plane (12), in each case a plurality of webs (5, 5') arranged so as to be distributed uniformly on the circumference and rising radially inwards, **characterized in that** the webs (5, 5') have at their radially inner ends, with respect to the circumferential direction, in each case on both sides, a contour which acts as a barb (6, 7) and with which the injected-on elastomer is in engagement, at the same time generating at least torsionally acting damping, the toothed ring (2) and the damping form a unit **in that**, to generate the damping, at least one elastomeric element (4) is injected onto an inner contour of the toothed ring, and the damping is generated by a one-piece elastomeric element (4), there being formed between the planes (11, 12) having the webs (5, 5') rising in the radial direction, an elastomeric ring (8) which runs around on the inner circumference of the toothed ring (2) and which forms a unit with the elastomer which, to generate damping, covers the webs (5, 5'), arranged axially on both sides of the elastomeric ring (8), on their radially inner end face (9) and in the region of the barbs (6, 7).

2. Helical gear (1) according to Claim 1, **characterized in that** the webs (5) arranged in the first axial plane (11) are arranged with offset with respect to the circumferential direction in relation to the webs (5') arranged in the second axial plane (12), in each case at least two webs (5, 5') being arranged in the two axial planes (11, 12), and the angle at which the webs (5) of the first axial plane (11) are offset in relation to the webs (5') of the second plane (12) is equal to that part of the full-circle angle which corresponds to the total number of webs (5, 5') of the two axial planes (11, 12), so that, with respect to the circumferential direction, there is always arranged in each case centrally between the webs (5, 5') of one axial plane (11, 12) a web (5', 5) of the other axial plane (12, 11) in each case.

3. Helical gear (1) according to Claim 1 or 2, the webs (5, 5') rising radially on the inside of the toothed ring (2) being covered in the region of the barbs (6, 7) and on their radial end face (9) by the damping-generating elastomer, **characterized in that** the elastomer covering the end faces (9) of the webs (5, 5') has in each case in a middle region of the end face (9) of a respective web (5, 5') a protuberance (10) having a damping action in the radial direction.

4. Helical gear (1) according to Claim 3, the webs (5, 5') being arranged so as to be offset to one another with respect to the two planes (11, 12), **characterized in that** the elastomeric protuberances (10) on the end faces (9) of the webs (5, 5') extend in the axial direction beyond the webs (5, 5') as far as the axial centre of the toothed ring (2) or beyond this, with the result that a damping action in the axial direction is afforded.

## Revendications

1. Roue hélicoïdale (1), réalisée sous forme de roue dentée assemblée, comprenant une première bride pour agencer de manière solidaire en rotation la roue hélicoïdale sur un arbre ou un pignon, une deuxième bride ou un disque (3), laquelle ou lequel est relié(e) à la première bride par force ou par engagement par complémentarité de forme, et une couronne dentée (2) agencée entre ceux-ci et pouvant tourner par rapport à ceux-ci, la roue hélicoïdale (1) étant pourvue d'un amortissement au moyen duquel la couronne dentée (2) est amortie par rapport à la première bride et à la deuxième bride ou au disque (3) à l'aide de parties les reliant et traversant la couronne dentée (2) dans la direction axiale, et à chaque fois plusieurs nervures (5, 5') agencées de manière uniformément répartie sur la périphérie et faisant saillie radialement vers l'intérieur étant agencées dans un premier plan axial (11) et dans un deuxième plan axial (12) sur le côté radialement intérieur de la couronne dentée (2), **caractérisée en ce que** les nervures (5, 5') comprennent à leurs extrémités radialement intérieures, par rapport à la direction périphérique, à chaque fois des deux côtés, un contour agissant en tant que barbe (6, 7), avec lequel contour vient en prise l'élastomère moulé par injection en réalisant un amortissement agissant au moins en torsion, la couronne dentée (2) et l'amortissement formant une unité, par le fait que, pour réaliser l'amortissement, au moins un élément élastomère (4) est moulé par injection sur un contour intérieur de la couronne dentée, et l'amortissement est réalisé par un élément élastomère (4) d'un seul tenant, une bague élastomère (8) s'étendant sur la périphérie intérieure de la couronne dentée (2) étant réalisée entre les plans (11, 12) comprenant les nervures (5, 5') faisant saillie dans la direction radiale, laquelle bague élastomère formant une unité avec l'élastomère recouvrant les nervures (5, 5') agencées axialement des deux côtés de la bague élastomère (8) sur leur côté frontal radialement intérieur (9) et dans la région des barbes (6, 7) pour réaliser l'amortissement.

2. Roue hélicoïdale (1) selon la revendication 1, **caractérisée en ce que** les nervures (5) agencées dans le premier plan axial (11) sont agencées suivant un décalage, par rapport à la direction périphérique, par rapport aux nervures (5') agencées dans le deuxième plan axial (12), au moins deux nervures (5, 5') étant respectivement agencées dans les deux plans axiaux (11, 12) et l'angle suivant lequel les nervures (5) du premier plan axial (11) sont décalées par rapport aux nervures (5') du deuxième plan (12) étant identique à la partie de l'angle plein correspondant au nombre total des nervures (5, 5') des deux plans axiaux (11, 12), de telle sorte que, par rapport à la direction périphérique, toujours à chaque fois centralement entre les nervures (5, 5') d'un plan axial (11, 12), une nervure (5, 5') de l'autre plan axial (12, 11) respectif soit disposée.

3. Roue hélicoïdale (1) selon la revendication 1 ou 2, les nervures (5, 5') faisant saillie radialement sur le côté intérieur de la couronne dentée (2) étant recouvertes, dans la région des barbes (6, 7) et sur leur côté frontal radial (9), par l'élastomère formant l'amortissement, **caractérisée en ce que** l'élastomère recouvrant les côtés frontaux (9) des nervures (5, 5') comprend respectivement, dans une région centrale du côté frontal (9) d'une nervure concernée (5, 5'), un bombement (10) présentant un effet d'amortissement dans la direction radiale.

4. Roue hélicoïdale (1) selon la revendication 3, les nervures (5, 5') étant agencées de manière décalée les unes par rapport aux autres par rapport aux deux plans (11, 12), **caractérisée en ce que** les bombements élastomères (10) sur les côtés frontaux (9) des nervures (5, 5') s'étendent dans la direction axiale au-delà des nervures (5, 5') jusqu'au centre axial de la couronne dentée (2) ou au-delà de celui-ci, de telle sorte qu'un effet d'amortissement soit présent dans la direction axiale.
